# EUROPÄISCHE PATENTSCHRIFT

(11) **EP 1 884 426 B1**
(45) Veröffentlichungstag und Bekanntmachung des Hinweises auf die Patenterteilung: **25.08.2010**
(21) Anmeldenummer: 07112845.8
(22) Anmeldetag: 20.07.2007
(51) Int. Cl.: B60S 1/52

(54) **Reinigungsanlage für Scheiben**
Cleaning facility for windscreens
Installation de nettoyage de pare-brises

(30) Priorität: 02.08.2006 DE 102006036041
(43) Veröffentlichungstag der Anmeldung: 06.02.2008
(73) Patentinhaber: Hella KGaA Hueck & Co., 59552 Lippstadt (DE)
(72) Erfinder: Seroka, Karl-Heinz, 33154 Saltzkotten (DE)
(74) Vertreter: Downar, Michael

(56) Entgegenhaltungen:
- EP-A- 1 147 956
- DE-A1-102004 022 998
- DE-A1-102005 002 259
- US-A- 6 050 503
- US-E1- R E38 013

## Beschreibung

Die Erfindung betrifft eine Reinigungsanlage für Scheiben in Fahrzeugen, insbesondere für Scheiben von Scheinwerfern, mit einer Pumpe zum Fördern einer Reinigungsflüssigkeit aus einem Vorratsbehältern mindestens zwei jeweils in Bereich der Scheiben angeordneten Düsen und mit einem einen Einlass und mindestens zwei Auslässe aufweisenden Ventil, wobei das Ventil ein in einem Gehäuse desselben verschiebbares Stellelement und mindestens ein mit dem Stellelement gekoppeltes und die Auslässe verschließbares Schließelement aufweist, so dass die Auslässe bei wiederholtem Ein-und Ausschalten der Pumpe mittels des Schließelemenies sequentiell öffenbar sind.

Aus der DE 10 2005 002 259 A1 ist eine Reinigungsanlage für Scheiben in Fahrzeugen bekannt, die den an die Scheiben Reinigungsflüssigkeit abstrahlenden Düsen jeweils ein Ventil zuordnet. Die Ventile sind zylinderförmig ausgebildet, wobei ein rohrförmiger Träger (Düsenträger) der Düsen jeweils über einen im Zylinderhohlraum abgedichteten Kolbenkopf verschiebbar in dem Ventil angeordnet ist. Innerhalb des Düsenträgers verläuft ein Reinigungsflüssigkeitskanal, wobei ein Einlass mantelseitig des zylinderförmigen Gehäuses des Ventils angeordnet ist. In einer Grundstellung des Ventils ist der Einlass mittels eines auf dem Düsenträger verschiebbaren Gleitelementes Das Gleitelement wird mittels einer Druckfeder, die sich an dem Kolbenkopf abstützt, in der Grundstellung gehalten. Im Einschaltzustand der Pumpe wird der Einlass mit Reinigungsflüssigkeit beaufschlagt und das Gleitelement gegen die Stellkraft der Druckfeder so weit verschoben, dass der Einlass freigegeben ist und somit Reinigungsflüssigkeit durch den Reinigungsflüssigkeitskanals des Düsenträgers fließen kann, Wird die Pumpe in einen Auschaltzustand versetzt, ermöglicht eine düsenseitig den Düsenträger umgebende Rückstellfeder das Zurückverbringen des Gleitelementes in eine Blockierstellung, in der bei erneutem Beaufschlagen des Einlasses mit Reinigungsflüssigkeit der Einlass des Reinigungsflüssigkeitskanals in den Düsenträger nicht freigegeben wird. Zu diesem Zweck weist das Gleitelement eine Kulisse auf, so dass die beiden Ventile sequentiell und wechselweise offenbar bzw, schließbar sind. Nachteilig an der bekannten Reinigungsanlage ist, dass Dichtungs- und Federbauteile erforderlich sind. Ferner muss die Anzahl der Ventile mit der Anzahl der Düsen übereinstimmen, so dass der Montageaufwand relativ groß ist. Weiterhin ist die Fehleranfälligkeit relativ groß, da bei Ausfall eines Ventils die sequentielle Förderung der Reinsgungsflüssigkeit zu den Düsen nicht mehr gewährleistet ist. Da die Ventile baulich mit den Düsen verbunden sind, können sie nur im Zusammenhang mit der Düse ausgetauscht werden. Eine Nachrüstung ausschließlich der Ventile ist nicht möglich.

Aus der DE 100 19 283 A1 ist eine Reinigungsanlage für Scheiben in Fahrzeugen bekannt, die eine Pumpe zum Fördern einer Reinigungsflüssigkeit von ei-nem Vorratsbehälter zu mindestens zwei jeweils im Bereich von Scheiben angeordneten Düsen aufweist. Zwischen der Pumpe und den Düsen ist ein Ventil angeordnet, mittels dessen den Düsen sequentiell Reinigungsflüssigkeit bereitgestellt wird. Das Ventil weist einen mit der Pumpe verbundenen Einlass sowie zwei Auslässe auf, die jeweils mit einer Düse verbunden sind. Das Ventil weist ein verschiebbares Stellelement auf, das mit einem die auslässe sequentiell offenbaren Schließelement gekoppelt ist. Da das Schließelement senkrecht zur Strömungsrichtung der Reinigungsflüssigkeit innerhalb des Gehäuses des Ventils verschiebbar angeordnet ist, sind die Anforderungen hinsichtlich der Dichtigkeit des sich innerhalb des Ventils ausbildenden Förderkanals relativ hoch.

Aufgabe der vorliegenden Erfindung ist es daher, eine Reinigungsanlage für Scheiben derart weiterzubilden, dass der Aufbau eines Ventils vereinfacht wird, wobei insbesondere keine mit auf Reibung basierenden Dichtungen versehenen Bauteile des Ventils erforderlich sind.
Zur Lösung dieser Aufgabe ist die Erfindung in Verbindung mit dem Oberbegriff des Patentanspruchs 1 dadurch gekennzeichnet, dass das Schließelement über eine Kulisse mit dem Stellelement gekoppelt ist, derart, dass im Einschaltzustand der Pumpe das Stellelement aus einer ersten Grundstellung in eine erste Schaltstellung verbracht wird, in der sich ein erster Auslass in Öffnungsstellung und ein zweiter Auslass in Schließstellung befinden, zum Fördern der Reinigungsflussigkeit zu der dem ersten Auslass zugeordneten Düse, dass im Ausschaltzustand der Pumpe das Stellelement aus der ersten Schaltstellung in eine zweite Grundstellung verbracht wird, in der sich zumindest der erste Auslass in Öffnungsstellung befindet, dass im wiederholten Einschaltzustand der Pumpe das Stellelement aus der zweiten Grundstellung in eine zweite Schaltstellung verbracht wird, in der sich der zweite Auslass in Öffnungsstellung und der erste Auslass in SChließstellung befinden zum Fördern der Reinigungsflüssigkeit zu der dem zweiten Auslass zugeordneten Düse.

Der besondere Vorteil der Erfindung besteht darin, dass das Ventil langzeitstabil und mit geringem Verschleiß in definierte Schaltstellungen bringbar ist, wobei weder Federelemente noch durch Dichtungen hervorgerufene Reibungskräfte erforderlich sind. Erfindungsgemäß i das Stellelement mit einer Kulisse gekoppelt, mittels derer ein Schließelement derart einstellbar ist, dass die Auslässe des Ventils sequentiell offenbar bzw. schließbar sind.

Nach einer bevorzugten Ausführungsform der Erfindung ist die Kulisse als eine herzförmige und/oder fischgrätenförmige endlose Führungsbahn ausgebildet, in der ein Eingreifzapfen des Schließelementes geführt ist. Dadurch, dass die Führungsbahn endlos ausgebildet ist, kann kontinuierlich ein aufeinander folgendes Öffnen und Schießen unterschiedlicher Auslässe in Abhängigkeit von dem Einschalt- bzw. Ausschaltzustand der Pumpe ermöglicht werden. Die Länge des Ventilgehäuses entspricht vorzugsweise der Summe der Länge der Kulisse und der Länge des Führungsarms. Auf diese Weise kann die gesamte Länge des Ventilgehäuses für unterschiedliche Schaltstellungen bzw. Grundstellungen Platz sparend ausgenutzt werden.

Nach einer Weiterbildung der Erfindung ist das Stellement mit einer Federeinrichtung verbunden, so dass nach Ausschalten der Pumpe das Stellelement selbsttätig in die erste bzw. zweite Grundstellung verbracht wird. Eine solche Federeinrichtung ist notwendig, wenn das Ventil zusammen mit statischen Düsen eingesetzt wird, bei denen keine automatische Rückstellung der Kulisse durch entgegen der Forderrichtung fließender Reinigungsflüssigkeit beim Abschalten der Pumpe erfolgt,

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen;
- Figur 1: eine perspektivische Draufsicht auf ein Ventil mit weggelassenem Deckel in einen ersten Grundstellung eines Stellelementes,
- Figur 2: eine perspektivische Draufsicht auf das Ventil mit weggelassenem Deckel in einer ersten Schalstellung des Stellelementes, in der ein erster Auslass des Ventils geöffnet ist,
- Figur 3: eine perspektivische Draufsicht auf das Ventil mit weggelassenem Deckel in einer zweiten Grundstellung des Stellelementes,
- Figur 4: eine perspektivische Draufsicht auf das Ventil mit weggelassenem Deckel in einer zweiten Schaltstellung des Stellelementes, in der ein zweiter Auslass des Ventils geöffnet ist und
- Figur 5: eine perspektivische Draufsicht auf das Ventil mit weggelassenem Deckel in einer Grundstellung des Stellementes gemäß Figur 1 mit Deckel in einer Grundstellung des Stellementes gemäß Figur 1 mit einer integrierten Federeinrichtung.

Eine Reinigungsanlage für Scheinwerfer eines Kraftfahrzeuges besteht im Wesentlichen aus einer Steuereinheit, einer Pumpe, einem als Reservoir für eine Reinigungsflüssigkeit dienenden Vorratsbehälter und einem der Pumpe nachgeordneten Ventil 1, das einen über ein Rohrleitung mit der Pumpe verbundenen Einlass 2 einerseits und einen ersten Auslass 3 und einen zweiten Auslass 4 andererseits aufweist, wobei die Auslässe 3, 4 über Verbindungsleitungen mit zu jeweils unterschiedlichen Scheinwerfern zugeordneten Düsen verbunden sind.

Das Ventil 1 weist ein Gehäuse 5 auf, das eine Kammer 6 bildet, in der ein Stellelement 7, eine Kulisse 8 sowie ein Schließelement 9 angeordnet sind. Das Schließelement 9 ist als ein Schwenkelement ausgebildet.

Das Stellelement 17 ist einstückig mit der plattenförmig ausgebildeten Kulisse 8 verbunden, wobei das Stellelement 7 sich aus der Ebene der Kulisse 8 erhebend senkrecht zu einer Achse 2' des Einlasses 2 erstreckt. Das Stellelement 7 bildet somit einen Strömungswiderstand im Förderweg der Reinigungsflüssigkeit und wird durch die Reinigungsflüssigkeit in Längsrichtung der Kamme 6 zwischen unterschiedlichen Stellungen verschoben.

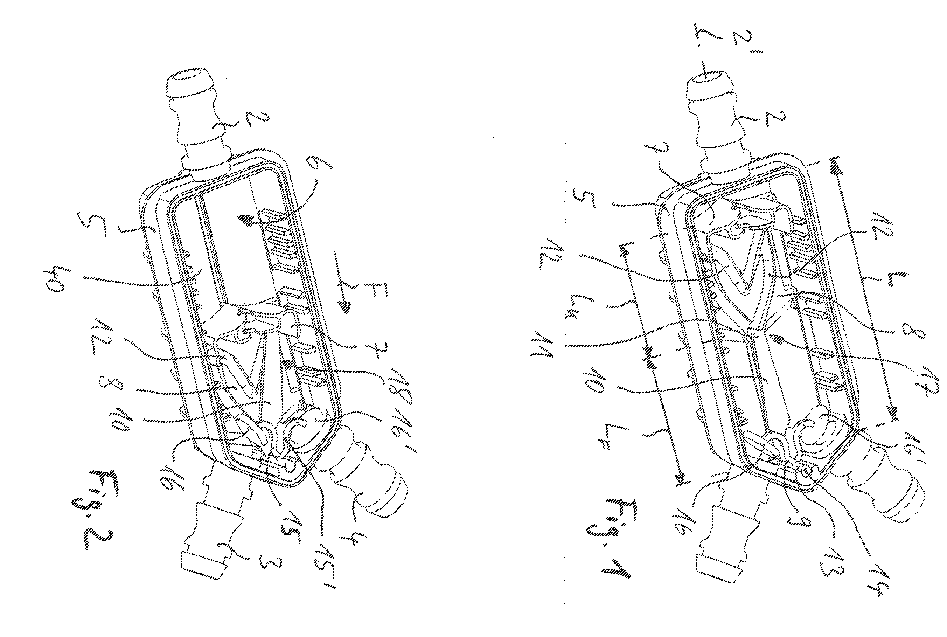

Das Schwenkelement 9 weist einen Führungsarm 10 auf, der in einer ersten Grundstellung des Stellelementes gemäß Figur 1 in Längsrichtung der Kammer 6 verläuft. An einem freien Ende des Führungsarms 10 ist ein Eingreifzapfen 11 vorgesehen, der in eine herzförmige und/oder fischgrätenförmige Führungsbahn 12 der Kulisse 8 eingreift. Der Führungsarm 10 ist in einem Fußbereich desselben über einen Schwenkzapfen 13 um eine senkrecht zu einer Förderrichtung F verlaufende Schwenkachse 14 gelagert. Die Schwenkachse 14 ist in einem in Förderrichtung F vorderen Bereich des Gehäuses 5 des Ventil 1 angeordnet in dem Fußbereich des Führungsarms 10 erstrecken sich zu beiden Seiten des Führungsarms 10 jeweils ein Haltearm 15, 15, die jeweils zu einem Schließteller 16, 16' führen. Die Schließteller 16 und 16' sind dem ersten Auslass 3 bzw. dem zweiten Auslass 4 zugeordnet und ermöglichen in einer vorgegebenen Schaltstellung ein Verschließen desselben.

In Abhängigkeit von der Schaltstellung der wird das Stellelement 7 in Längsrichtung der Kammer 6 verstellt. Ist die Pumpe in einem Einschaltzustand, wird das Stellelement 7 in Förderrichtung F verschoben. Befindet sich die Pumpe in eine Ausschaltzustand kann das Stellelement 7 durch den Rücklauf der Renigungsflüssigkeit entgegen der Förderrichtung F in Achtung des Einlasses 2 verschoben werden.

In Figur 1 ist eine erste Grundstellung des Stellelementes 7 dargestellt, in der durch Rücklauf der Reinigungsflüssigkeit durch den zweiten Auslass 4 das Stellelement 7 in eine dem Einlass 2 nahe gelegene erste Grundstellung verbracht wird. In der ersten Grundstellung ist der Eingreitzapfen 11 in einem ersten Scheitelbereich 17 der Kulisse 8 angeordnet, der in einem in Förderrichtung F vorderen Bereich der Kulisse 8 angeordnet ist. Die Lange L der Kammer entspricht der Summe der Lange L_{K} der Kulisse 8 und der Länge L_{F} des Führungsarms 10 des Schwenkelementes 9.

Sobald die Pumpe in einen Einschaltzustand versetzt wird, wird das Stellelement 7 aus der ersten Grundstellung gemäß Figur 1 in eine erste Schaltstellung gemäß Figur 2 verbracht, in der sich der erste Auslass 3 in einer Öffnungsstellung und der zweite Auslass 4 in einer Schließstellung betenden. Zu diesem Zweck wird der Eingreifzapfen 11 entlang einer zur Förderrichtung F schrägen Abschnitts der Führungsbahn 12 geführt, so dass in der ersten Schaltstellung der Eingreifzapfen 11 an einer ersten Längsseite 18 der Kulisse 8 in einem zum Stellelement 7 nahen Bereich angeordnet ist. Der schräge Abschnitt der Führungsbahn 12 ist als eine Rampe ausgebildet, die in Bewegungsrichtung des Eingreifzapfens 11 kontinuierlich ansteigt, bis der Eingreifzapfen 11 in der ersten Schalstellung in einer Vertiefung der Kulisse 8 angeordnet ist. Der Eingreifzapfen 11 ist über den Führungsarm 10 federnd angeordnet, so dass er stets auf die parallel zu einem Boden 40 des Gehäuses 5 verlautende Oberfläche der kanalförmigen Führungsbahn 12 drückt

der Führungsarm 10 bzw. der Eingreifzapfen 11 hat durch diese Zwangsführung eine Schwenkbewegung um einen spitzen Winkel um die Schwenkachse 14 durchgeführt so dass der zweite Auslass 4 durch den Schließteller 16' verschlossen und der erste Auslass 3 durch den Schließteller 16 freigegeben worden ist. Die Reinigungsflüssigkeit kann nun durch den ersten Auslass zu in Richlung der entsprechenden Düse befördert werden.

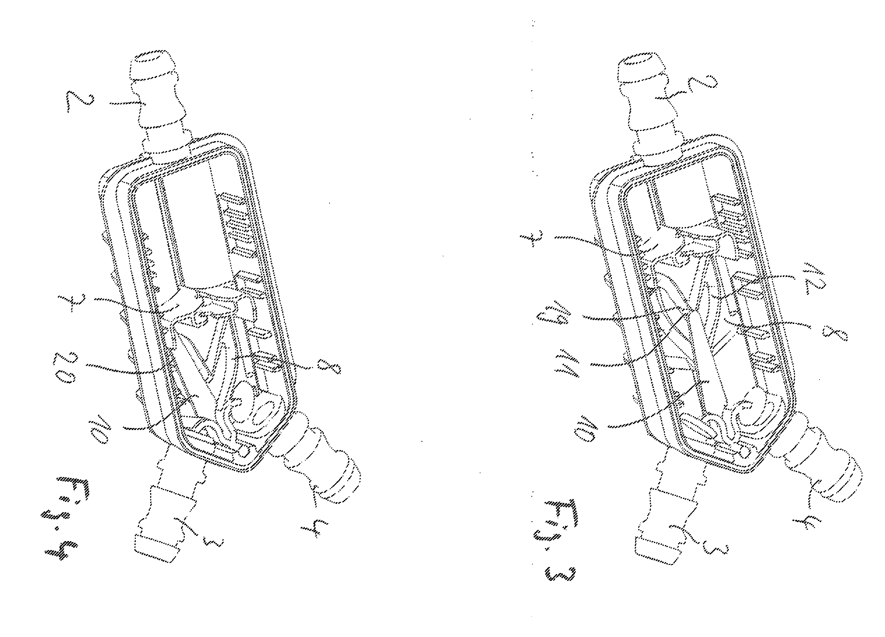

Sobald sich die Pumpe wieder in dem Ausschaltzustand befindet, wird das Stellement 7 durch den Rücklauf der Reinigungsflüssigkeit von dem ersten Auslass 3 entgegen der Förderrichtung F zurückbewegt, wobei der Eingreifzapfen 11 eine Schwenkbewegung zurück in eine Mittelstellung erfährt, in der er sich in einem zweiten Scheitelbereich 19 der Kulisse 8 befindet, siehe Figur 3. Der zweite Scheitelbereich 19 ist in einem Abstand zu dem in Förderrichtung F vorderen und hinteren Ende der Kulisse 8 angeordnet. Vorzugsweise befindet sich der zweite Scheitelbereich 19 in einem mittleren Bereich der Kulisse 8, Das Stellelement 7 befindet sich nun in einer in Figur 3 dargestellten zweiten Grundstellung.

Vermittels Verbringen der Pumpe in einen Einschaltzustand wird nachfolgend das Stellelement 7 in einen zweiten, in Figur 4 dargestellten, Schaltzustand verbracht, wobei der Führungsarm 10 bzw. der Eingreifzapfen 11 eine zu einer gegenüberliegenden zweiten Längsseite 20 gerichtele Schwenkbewegung erfährt. In der zweiten Schaltstellung befindet sich der zweite Auslass in Öffnungsstellung, während sich der erste Auslass in SchlieBstellung befindet. Die Reinigungsflüssigkeit kann nun durch den zweiten Auslass 4 zu der entsprechend nachgeordneten Düse gefördert werden, Hierdurch wird ein sequentielles Beaufschlagen der Düsen durch die Reingungsflüssigkeit erzielt.

Nachdem die Pumpe wieder in den Ausschaltzustand verbracht worden ist, erfolgt ein Zurückverbringen des Stellelementes 7 in die erste Grundstellung gemäß Figur 1 vermittels der durch den zweiten Auslass 4 rücklaufenden Reinigungsflüssigkeit.

Während sich das Stellelement 7 bzw. die Kulisse 8 in der ersten und in der zweiten Schaltstellung in derselben Position befinden, sind die Lagen derselben in der ersten Grundstellung und der zweiten Grundstellung verschieden. In der ersten und zweiten Grundstellung ist das Schwenkelement 9 symmetrisch zu einer Mittelachse der Kammer 6 angeordnet. In der ersten und zweiten Schaltstellung ist das Schwenkelement 9 um einen gleichen Schwenkwinkel zu beiden Seiten einer Längsmittelebene der Kammer 6 an gegenüberliegenden Seiten verschwenkt angeordnet.

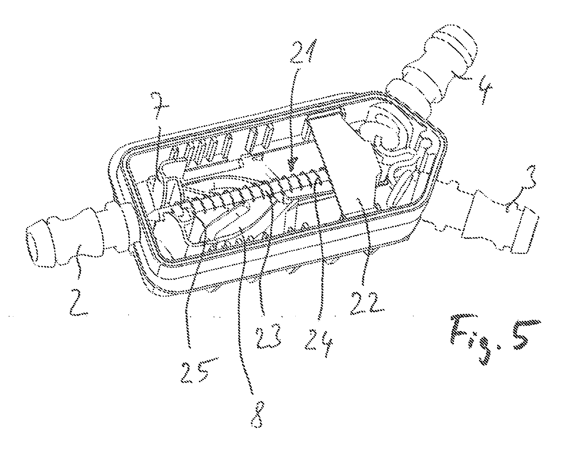

Nach einer zweiten Ausführungsform des Ventils 1 gemäß Figur 5 kann dieses zusätzlich eine Federeinrichtung 21 aufweisen, vermittels derer das Stellelement 7 aus der ersten und der zweiten Schaltstellung jeweils in die jeweiligen Grundstellungen zurückverschiebbar ist. Diese Ausführungsform ist dann vorzusehen, wenn die Düsen statisch ausgebildet sind, das heißt wenn diese kein Rückfließen der Reinigungsflüssigkeit in Richtung des Ventils 1 zulassen. Zu diesem Zweck weist die Federeinrichtung 21 eine formschlüssig und test in die Kammer 6 eingebrachte Ankerplatte 22 auf, die einstückig mit einem Dorn 23 verbunden ist Der Dorn 23 ist mit einer Schraubenfeder 24 umwickelt, die sich mit einem Ende vorgespannt an einer Anschlagfläche 25 des Stellelementes 7 abstützt. Die Ankerplatte 22 der Federeinrichtung 21 ist einem zu dem ersten Auslass 3 und dem zweiten Auslass 4 nahen Bereich der Kammer 6 angeordnet.

Die Führungsbahn 12 der Kullsse 8 ist derart ausgebildet, dass der Eingreifzapten 11 in Bewegungsrichtung von den entsprechenden Grundstellungen bzw. Schaltstellungen entlang einer schrägen Rampe nach oben entgegen des Bodens 40 bewegt wird, wobei der Eingreifzapfen 11 in der vorgesehenen Grundstellung bzw, Schaltstellung in einer Vertiefung der Kulisse 8 angeordnet ist. Die Vertiefungen der Kulisse 8 weisen jeweils die gleiche Höhe bzw. den gleichen Abstand zum Boden 40 des Gehäuses 5 auf. Dadurch, dass der Eingreifzapfen 11 federnd auf der Oberfläche der Führungsbahn 12 anliegt, kann mittels Druckbeaufschlagung des Stellelements 7 der Eingreifzapfen 11 unter Anlage desselben auf der Oberfläche der Führungsbahn 12 angehoben werden, so dass er von einer entsprechenden Grundstellung bzw. Schaltstellung in die nächste Schaltstellung bzw. Grundstellung bewegbar ist.

## Patentansprüche

1. Reinigungsanlage für Scheiben in Fahrzeugen, insbesondere für Scheiben von Scheinwerfern, mit einer Pumpe zum Fördern einer Reinigungsflüssigkeit aus einem Vorratsbehältern zu mindestens zwei jeweils im Bereich der Scheiben angeordneten Düsen und mit einem einen Einlass und mindestens zwei Auslässe aufweisenden Ventil, wobei das Ventil ein in einem Gehäuse desselben verschiebbares Stellelement und mindestens ein mit dem Stellelement gekoppeltes und die Auslässe verschließbares Schließelement aufweist, so dass die Auslässe bei wiederholtem Ein- und Ausschalten der Pumpe mittels des Schließelementes sequentiell öffenbar sind, **dadurch gekennzeichnet, dass** das Schließelement (9) über eine Kulisse (8) mit dem Stellelement (7) gekoppelt ist, derart,
- dass im Einschaltzustand der Pumpe das Stellelement (7) aus einer ersten Grundstellung in eine erste Schaltstellung verbracht wird, in der sich ein erster Auslass (3) in Öffnungsstellung und ein zweiter Auslass (4) in Schließstellung befinden, zum Fördern der Reinigungsflüssigkeit zu der dem ersten Auslass (3) zugeordneten Düse,
- dass im Ausschaltzustand der Pumpe das Stellelement (7) aus der ersten Schaltstellung in eine zweite Grundstellung verbracht wird, in der sich zumindest der erste Auslass (3) in Öffnungsstellung befindet,
- dass im wiederholten Einschaltzustand der Pumpe das Stellelement (7) aus der zweiten Grundstellung in eine zweite Schaltstellung verbracht wird, in der sich der zweite Auslass (4) in Öffnungsstellung und der erste Auslass (3) in Schließstellung befinden zum Fördern der Reinigungsflüssigkeit zu der dem zweiten Auslass (4) zugeordneten Düse.

2. Reinigungsanlage nach Anspruch 1, **dadurch gekennzeichnet, dass** die Kulisse (8) derart ausgebildet ist, dass sich im Ausschaltzustand der Pumpe das Stellelement (7) in einer ersten Grundstellung oder zweiten Grundstellung befindet, in der sich zumindest der zweite Auslass (4) in Öffnungsstellung befindet für den Rücklauf der Reinigungsflüssigkeit von der dem zweiten Auslass (4) zugeordneten Düse in Richtung des Vorratsbehälters bzw, in der sich zumindest der erste Auslass (3) in Öffnungsstellung befindet für den Rücklauf der Reinigungsflüssigkeit von der dem ersten Auslass (3) zugeordneten Düse in Richtung des Vorratsbehälters.

3. Reinigungsanlage nach Anspruch 1 oder 2, **dadurch gekennzeichnet, dass** die Kulise (8) eine herzförmige und/oder fischgrätenförmige endlose Führungsbahn (12) aufweist, in der ein Eingreifzapfen (11) des Schließelementes (9) geführt ist.

4. Reinigungsanlage nach einem der Ansprüche 1 bis 3, **dadurch gekennzeichnet, dass** die Führungsbahn (12) derart verläuft dass das Stellelement (7) in der ersten Schaltstellung und in der zweiten Schaltstellung dieselbe Lage in dem Gehäuse (5) aufweist.

5. Reinigungsanlage nach einem der Ansprüche 1 bis 4, **dadurch gekennzeichnet, dass** die Führungsbahn (12) derart verläuft, dass der Eingreifzapfen (11) in der ersten Grundstellung und der zweiten Grundstellung des Stellelementes (7) in einem axial versetzt angeordneten Scheitelbereich (17,19) eines Abschnitts der Führungsbahn (12) angeordnet ist.

6. Reinigungsanlage nach einem der Anspruche 1 bis 5, **dadurch gekennzeichnet, dass** die Führungsbahn (12) derart verläuft, dass der Eingreifzapfen (11) in der ersten Schaltellung des Stellelementes (7) auf einer ersten Längsseite (18) der Kulisse(8) und in der zweiten Schaltstellung auf einer gegenüberliegenden zweiten Längsseite (20) der Kulisse (8) angeordnet ist.

7. Reinigungsanlage nach einem der Ansprüche 1 bis 6, **dadurch gekennzeichnet, dass** das Schließelement (9) in der ersten Grundstellung oder zweiten Grundstellung einen in Längsrichtung des Gehäuses (5) verlaufenden und endseitig den Eingreifzapfen (11) aufweisenden Führungsarm (10) aufweist, dessen Länge (L_{F}) mit der Länge (L_{K}) der Kulisse (8) übereinstimmt.

8. Reinigungsanlage nach einem der Ansprüche 1 bis 7, **dadurch gekennzeichnet, dass** das Schließelement (9) zwei Schließteller (16, 16') aufweist, die sich jeweils zu gegenüberliegenden seiten des Führungsarms (10) ausgehend von einem drehbar um eine senkrecht zum Führungsarm (10) verkaufende Schwenkachse (14) gelagerten Schwenkzapfen (13) erstrecken zum wechselweisen Verschließen des ersten Auslasses (3) und des zweiten Auslasses (4).

9. Reinigungsanlage nach einem der Ansprüche 1 bis 8, **dadurch gekennzeichnet, dass** die Kulisse (6) einstückig mit dem Stellelement (7) verbunden ist, wobei die Kulisse (8) platienförmig verläuft.

10. Reinigungsanlage nach einem der Ansprüche 1 bis 9, **dadurch gekennzeichnet, dass** das Stellelement (7) mit einer Federeinrichtung (21) verbunden ist, derart, dass nach Ausschalten der Pumpe das Stellement (7) selbsttätig in die erste Grundstellung bzw. zweite Grundstellung verbracht wird.

11. Reinigungsanlage nach einem der Ansprüche 1 bis 10, **dadurch gekennzeichnet, dass** das Stellelement (7) senkrecht zur Achse des Einlasses (2) bzw. der Längsachse des Gehäuses (5) verläuft.

## Claims

1. Cleaning equipment for cover lens in vehicles, in particular for the cover lens on headlamps, with a pump to propel a cleaning fluid out of a storage container to at least two nozzles placed in proximity to the pane and with a valve with one intake and at least two outlets, whereby the valve includes both an adjustable positioning element within its casing, and at least one closing element for the outlets which is linked to the adjustable positioning element, such that the outlets can be sequentially opened by repeated switching on and off of the pump by using the closing element, **characterised by** the fact that the closing element (9) is linked via a motion link (8) to the positional element (7), in such a manner
- That when the pump is switched on, the positional element (7) is moved from a first rest position to a first switch position, in which the first outlet (3) is in the open position and a second outlet (4) is in the closed position, to propel the cleaning fluid to the nozzle assigned to the first outlet (3).
- That when the pump is switched to the off position, the positional element (7) is moved from the first switch position to a second rest position, in which at least the first outlet (3) is in open position,
- That when the pump is again switched on, the positional element (7) is moved out of the second rest position into a second switch position, in which the second outlet (4) is in the open position and the first outlet (3) is in the closed position, when the cleaning fluid is propelled to the nozzle assigned to the second outlet (4).

2. Cleaning equipment according to Claim 1, **characterised in that** the motion link (8) is shaped in such a way, that when the pump is switched off the positional element (7) in a first rest position or second rest position, in which at least the second outlet (4) is in the open position for the flow back of the cleaning fluid from the nozzle assigned to the second outlet (4) towards the storage container or in which at least the first outlet (3) is in the open position for the flow back of the cleaning fluid from the nozzle assigned to the first outlet (3) in the direction of the storage container.

3. Cleaning equipment as defined in Claim 1 or 2, **characterised by** the fact that the motion link (8) includes an endless heart-shaped and/or fishbone shaped track (12), in which an insertion tap (11) of the closing element (9) is inserted.

4. Cleaning equipment as defined in Claim 1 to 3, **characterised by** the fact that the track (12) is shaped such that the positional element (7) in its first switchable position and in its second switchable position has the same position in the casing (5).

5. Cleaning equipment as defined in Claim 1 to 3, **characterised by** the fact that the track (12) is shaped such that the insertion tap (11) in the first rest position and the second rest position of the positioning element (7) is attached to a axially offset apex area (17, 19) of a section of the track (12).

6. Cleaning equipment as defined in Claim 1 to 5, **characterised by** the fact that the track (12) is of such a shape that the insertion tap (11) in the first switched positin of the positional element (7) is placed on one of the long sides (18) of the track (8) and in the second switched position on the opposite second long side (20) of the track (8).

7. Cleaning equipment as defined in Claim 1 to 6, **characterised by** the fact that the closing element (9) in the first rest position or the second rest position shows a drive arm running lengthwise in the casing (5) and showing the insertion tap (11) at its end, whose length (Lf) matches the length (Lk) of the track (8).

8. Cleaning equipment as defined in Claim 1 to 7, **characterised by** the fact that the closing element (9) shows two closing plates (16, 16'). Each of these plates extends to the side of the drive arm (10) positioned opposite to these, and extending from a rotatable bearing-mounted pivot pin (13) through a pivot axis (14) which runs perpendicular to the drive arm (10), in order to close the first (3) and the second outlet (4) alternatively.

9. Cleaning equipment as defined in Claim 1 to 8, **characterised by** the fact that the link (8) is integrally connected to the actuating element (7), where the link (8) behaves like a plate.

10. Cleaning equipment as defined in Claim 1 to 9, **characterised by** the fact that the actuating element (7) is connected to a spring device (21), such that, after switching off the pump, the actuating element (7) is moved automatically to the first base position or second base position respectively.

11. Cleaning equipment as defined in Claim 1 to 10, **characterised by** the fact that the actuating element (7) runs perpendicular to the axis of the inlet (2) and the longitudinal axis of the housing (5).

## Revendications

1. Installation de nettoyage pour les glaces des véhicules automobiles surtout pour les glaces des projecteurs, avec une pompe pour extraire un liquide de nettoyage d'un réservoir à au moins deux gicleurs arrangés chacun dans la zone des glaces et avec une soupape présentant une entrée et au moins deux sorties, la soupape présentant dans un seul boîtier un élément de réglage mobile et au moins un élément de fermeture relié à l'élément de réglage et verrouillant les sorties de sorte que les sorties soient séquentiellement ouvrables à l'aide de l'élément de fermeture lors d'une mise en marche et en arrêt répétée de la pompe **caractérisée en ce que** l'élément de fermeture (9) est relié à l'élément de réglage (7) au moyen d'une coulisse (8) de manière à ce que
- l'élément de réglage (7) en état d'activation de la pompe soit mis d'une première position de base à une première position de commutation dans la quelle se trouvent une première sortie (3) en position d'ouverture et une deuxième sortie (4) en position de fermeture pour extraire le liquide de nettoyage au gicleur attribué à la première sortie (3).
- l'élément de réglage (7) en état de désactivation de la pompe soit mis de la première position de commutation à une deuxième position de base dans la quelle se trouve au moins la première sortie (3) en position d'ouverture.
- l'élément de réglage (7) en état d'activation répété de la pompe soit mis de la deuxième position de base à une deuxième position de commutation dans la quelle se trouvent la deuxième sortie (4) en position d'ouverture et la première sortie (3) en position de fermeture pour extraire le liquide de nettoyage au gicleur attribué à la deuxième sortie (4).

2. Installation de nettoyage selon la revendication 1, **caractérisée en ce que** la coulisse (8) est réalisée de sorte que l'élément de réglage (7) se trouve dans une première ou deuxième position de base en état de désactivation de la pompe dans la quelle au moins la deuxième sortie (4) se trouve en position d'ouverture pour le retour du liquide de nettoyage du gicleur affecté à la deuxième sortie (4) dans la direction du réservoir ou bien dans la quelle au moins la première sortie (3) se trouve en position d'ouverture pour le retour du liquide de nettoyage du gicleur affecté à la première sortie (3) dans la direction du réservoir.

3. Installation de nettoyage selon la revendication 1 ou 2, **caractérisée en ce que** la coulisse (8) présente une glissière (12) infinie en forme de coeur et/ou d'arête de poisson dans laquelle un tenon (11) de l'élément de fermeture est introduit (9) .

4. Installation de nettoyage selon une des revendications 1 à 3, **caractérisée en ce que** la glissière (12) s'étend de sorte que l'élément de réglage (7) présente la même position dans la première et deuxième position de commutation dans le boîtier (5).

5. Installation de nettoyage selon une des revendications 1 à 4, **caractérisée en ce que** la glissière (12) s'étend de sorte que le tenon (11) dans la première et la deuxième position de base de l'élément de réglage (7) soit disposé dans une zone de sommet (17, 19) déplacée axialement d'une section de la glissière (12).

6. Installation de nettoyage selon une des revendications 1 à 5, **caractérisée en ce que** la glissière (12) s'étend de sorte que le tenon (11) soit disposé dans la première position de commutation de l'élément de réglage (7) sur un premier côté longitudinal (18) de la coulisse (8) et dans la deuxième position de commutation sur un deuxième côté longitudinal (20) opposé de la coulisse (8).

7. Installation de nettoyage selon une des revendications 1 à 6, **caractérisée en ce que** l'élément de fermeture (9) dans la première ou deuxième position de base présente un bras de guidage (10) s'étendant dans la direction longitudinale du boîtier (5) et présentant le tenon (11) au bout dont la longueur (L_{P}) correspond à la longueur (L_{K}) de la coulisse (8).

8. Installation de nettoyage selon une des revendications 1 à 7, **caractérisée en ce que** l'élément de fermeture (9) présente deux volets de fermeture (16, 16') ronds qui s'étendent aux côtés opposés du bras de guidage (10) partant d'un tenon de pivotement (13) pivotant autour d'un axe de pivotement (14) s'étendant verticalement au bras de guidage (10) pour fermer réciproquement la première sortie (3) et la deuxième sortie (4).

9. Installation de nettoyage selon une des revendications 1 à 8, **caractérisée en ce que** la coulisse (8) fait corps avec l'élément de réglage (7), la coulisse (8) s'étendant sous forme de plaques.

10. Installation de nettoyage selon une des revendications 1 à 9, **caractérisée en ce que** l'élément de réglage (7) est relié avec un dispositif à ressort (21) de sorte que l'élément de réglage (7) retourne automatiquement à la première respectivement deuxième position de base après la désactivation de la pompe.

11. Installation de nettoyage selon une des revendications 1 à 10, **caractérisée en ce que** l'élément de réglage (7) s'étend verticalement à l'axe de l'entrée (2) respectivement à l'axe longitudinal du boîtier (5).
